**Europäisches Patentamt**

**European Patent Office**

**Office européen des brevets**

(19)

(11) Veröffentlichungsnummer: **0 306 829 B1**

(12) **EUROPÄISCHE PATENTSCHRIFT**

(45) Veröffentlichungstag der Patentschrift: **04.03.92**

(51) Int. Cl.⁵: **F02B 37/00**, F02B 37/12

(21) Anmeldenummer: **88114261.6**

(22) Anmeldetag: **01.09.88**

(54) **Verbrennungsmotor mit Registeraufladung.**

(30) Priorität: **11.09.87 CH 3527/87**

(43) Veröffentlichungstag der Anmeldung:
**15.03.89 Patentblatt 89/11**

(45) Bekanntmachung des Hinweises auf die Patenterteilung:
**04.03.92 Patentblatt 92/10**

(84) Benannte Vertragsstaaten:
**AT CH DE FR GB IT LI SE**

(56) Entgegenhaltungen:
EP-A- 0 091 139        EP-A- 0 141 634
EP-A- 0 178 270        FR-A- 2 418 864
FR-A- 2 444 798        FR-A- 2 549 534

PATENT ABSTRACTS OF JAPAN, Band 11,
Nr. 295 (M-626)[2742], 24. September 1987,
Seite 39 M 626; & JP-A-62 85 123
(MITSUBISHI HEAVY IND. LTD) 18-04-1987

(73) Patentinhaber: **BBC Brown Boveri Aktiengesellschaft**

**CH-5401 Baden(CH)**

(72) Erfinder: **Ammann, Hansruedi**
**Reiherweg 3**
**CH-5036 Oberentfelden(CH)**
Erfinder: **Mathey, Christoph**
**Lindenhof 8**
**CH-5430 Wettingen(CH)**

**Beschreibung**

Die vorliegende Erfindung betrifft einen Verbrennungsmotor mit Registeraufladung, mit einem ersten Abgasturbolader und einem zweiten Abgasturbolader, deren Laderturbinen parallel an einen Abgasaufnehmer des Verbrennungsmotors angeschlossen sind und deren Verdichter mit ihren Ladeluftstutzen parallel in eine Ladeluftsammelleitung einmünden, welche diese Ladeluftstutzen mit dem Ladeluftaufnehmer des Motors verbindet.

Stand der Technik

Bei Verbrennungsmotoren mit Abgasturboaufladung in ihrer einfachsten Form, d.h. mit einem einzigen, ein- oder auch zweistufigen Turbolader bestehen, physikalisch durch das Verhalten von Turbine und Verdichter bestimmt, betriebliche Unzulänglichkeiten, und zwar ein auf nur einen verhältnismässig engen Bereich eingeschränktes, leistungs- und wirkungsgradmässig zufriedenstellendes Betriebsverhalten, und damit zusammenhängend Kraftstoffverbräuche, die, über den ganzen Voll- und Teillastbereich gesehen, den heutigen strengen Anforderungen an einen wirtschaftlichen Motorbetrieb nicht genügen.

Der erstgenannte Mangel lässt sich durch eine Registeraufladung nach bekannten Systemen mit mindestens zwei Abgasturboladern oder Abgasturboladergruppen, worunter zweistufige Lader zu verstehen sind, befriedigend beheben, was aber für den letztgenannten Mangel, den zu hohen Kraftstoffverbrauch, noch nicht optimal erreicht werden konnte.

Um bei einer Registeraufladung den Kraftstoffverbrauch zu reduzieren, ist vorgeschlagen worden, einen Teil der Motorabgase zum Antrieb einer mit der Motorkurbelwelle oder, im Falle eines Motors mit Getriebe, mit der Abtriebswelle des letzteren kuppelbaren Nutzturbine zu benutzen. Dadurch erhält man zwar im gesamten Lastbereich eine Verbrauchsreduktion, da der zusätzliche Abgasstrom, den die Turbine des Hauptladers bei Abschaltung der Nutzturbine erhält, den günstigen Betriebsbereich wohl erweitert, ihn jedoch nicht über den ganzen, praktisch wichtigen Bereich ausdehnt und der Teillastverbrauch daher nicht durchwegs in die Nähe der möglichen Bestverbrauchswerte gedrückt werden kann.

Die FR-A-2 418 864 zeigt eine Registeraufladung mit einem ersten und einem zweiten Abgasturbolader, deren Laderturbinen parallel an einen Abgasaufnehmer des aufzuladenden Verbrennungsmotors angeschlossen sind und deren Verdichter mit ihren Ladeluftstutzen parallel in eine Ladeluftsammelleitung einmünden, welche diese Ladeluftstutzen mit dem Ladeluftaufnehmer des Motors verbindet. In der Laderturbinenabgasleitung zwischen dem Abgasaufnehmer und der Laderturbine des zweiten Abgasturboladers sowie im Ladeluftstutzen zwischen dem Verdichter des zweiten Abgasturboladers und der Ladeluftsammelleitung ist je eine Absperrklappe angeordnet.

Kombinationen einer Nutzturbine mit einem Verbrennungsmotor mit Abgasturboaufladung zur Verbesserung des Gesamtwirkungsgrades der Motoranlage sind bekannt, z.B. aus der EP-PS 0 019 139 und aus der EP-Patentanmeldung 0 091 165. Die erstgenannte beschreibt einen Verbrennungsmotor mit einem Abgasturbolader und einer Nutzturbine, die, direkt oder indirekt, über ein Getriebe mit dem Motor in Antriebsverbindung steht und die entweder parallel zum Abgasturbolader an den Abgasaufnehmer (Abgasreceiver) angeschlossen ist oder mit dem Turbolader in Serie hinter diesem, in Strömungsrichtung der Abgase gesehen, geschaltet ist. Um ein befriedigendes Teillastverhalten zu erzielen, ist die "Turbinenfläche" der Laderturbine, worunter ihr Eintrittsquerschnitt für das Abgas zu verstehen ist, für den jeweils betrieblich wichtigen Teillastbereich dimensioniert. In diesem wird die Nutzturbine stillgesetzt, wodurch die Laderturbine den gesamten Abgasstrom erhält und dank der erwähnten, gegenüber den Anforderungen bei Vollast reduzierten Turbinenfläche den für den Teillastbereich gewünschten hohen Ladedruck erzeugt. Bei der Parallelschaltung von Laderturbine und Nutzturbine wird die Abgaszufuhr zu dieser abgesperrt und der Abgasstrom vor ihr im Havariefall durch eine von der Abgasleitung abzweigende Umgehungsleitung ins Freie umgeleitet. In beiden Fällen erhält also die Laderturbine im Teillastbereich den vollen Abgasstrom.

Die zweite erwähnte Druckschrift, EP-A1-0 199 165, beschreibt eine Schiffsantriebsanlage mit einem aufgeladenen Dieselmotor, dessen Laderturbine ebenfalls für eine maximale Schluckfähigkeit in einem Teillastbereich dimensioniert ist, beispielsweise mit einem Abgaseintrittsquerschnitt von 80 % der Volllastauslegung. Der überschüssige Abgasteilstrom wird aus dem Abgasaufnehmer direkt einer an einem freien Ende eines Hilfsdiesel/Generator-Aggregats als Stromerzeuger an- und abkuppelbarer Nutzturbine zugeführt, deren Arbeitsleistung den Hilfsdiesel entlastet und den Kraftstoffverbrauch senkt. Um bei Teillastbetrieb hohe Ladedrücke zu erhalten, kann der Abgasstrom zur Nutzturbine abgesperrt und diese vom Stromerzeuger abgekuppelt und stillgelegt werden. Die Laderturbine erhält dann den vollen Abgasstrom, wobei sie wegen ihrer Unterdimensionierung gegenüber der Vollastauslegung mit gutem Wirkungsgrad arbeitet und der Verdichter den für einen guten Teillastwirkungsgrad des Hauptdieselmotors erforderlichen hohen Ladedruck liefert.

Falls die Nutzturbine aus einem Grund, der mit dem Teillastbetrieb nichts zu tun hat, stillgesetzt werden muss, so wird ihre Abgaszuleitung abgesperrt und das überschüssige Abgas über eine Abblaseleitung in den Auspuff hinter der Laderturbine geleitet. Diese erhält also auch in einem solchen Falle nur höchstens jenen Abgasstrom, für den sie ausgelegt ist.

Bei beiden vorerwähnten Anlagen erhält man durch eine gegenüber dem Vollastabgasstrom unterdimensionierte Laderturbine ein besseres Teillastverhalten als mit einer für Vollast ausgelegten Laderturbine mit nicht verstellbarem Eintrittsquerschnitt. Der überschüssige Abgasstrom wird in einer Nutzturbine verarbeitet und erhöht den Gesamtwirkungsgrad der Anlage.

Die Verbesserung des Teillastverhaltens, die sich auf diese Weise ergibt, ist zwar nennenswert, doch ist es zwecks Verringerung der Umweltbelastung durch Abgase natürlich erstrebenswert, den Bereich günstigen Teillastverhaltens noch zusätzlich zu erweitern und damit im Zusammenhang eine zusätzliche Senkung des Kraftstoffverbrauchs zu erreichen. Die vorliegende Erfindung entstand aus der Aufgabe, einen Verbrennungsmotor mit diesen verbesserten Eigenschaften zu schaffen.

Erfindungsgemäss wird diese Aufgabe bei einem Verbrennungsmotor mit Registeraufladung der eingangs genannten Art gelöst mit den kennzeichnenden Merkmalen des Anspruchs 1.

Durch verschiedene Zuschaltungsmöglichkeiten der Nutzturbine und der Laderturbine der Registeraufladung an den Abgasaufnehmer (Receiver) des Motors ist dessen Leistungscharakteristik über einen weiten Bereich ihrem optimalen Verlauf sehr gut angenähert

Die Erfindung wird im folgenden anhand eines in der Zeichnung dargestellten Ausführungsbeispiels näher erläutert.

Kurze Beschreibung der Figuren

In der Zeichnung stellen dar:

Fig. 1 schematisch eine erste Ausführungsform eines erfindungsgemässen Motors mit den wesentlichen Bauteilen,

Fig. 2 Details einer zweiten Ausführungsform, und die

Fig. 3 Charakteristiken des Motors bei verschiedenen Schaltungen der Nutzturbine und der Laderturbine.

Beschreibung zweier Ausführungsbeispiele

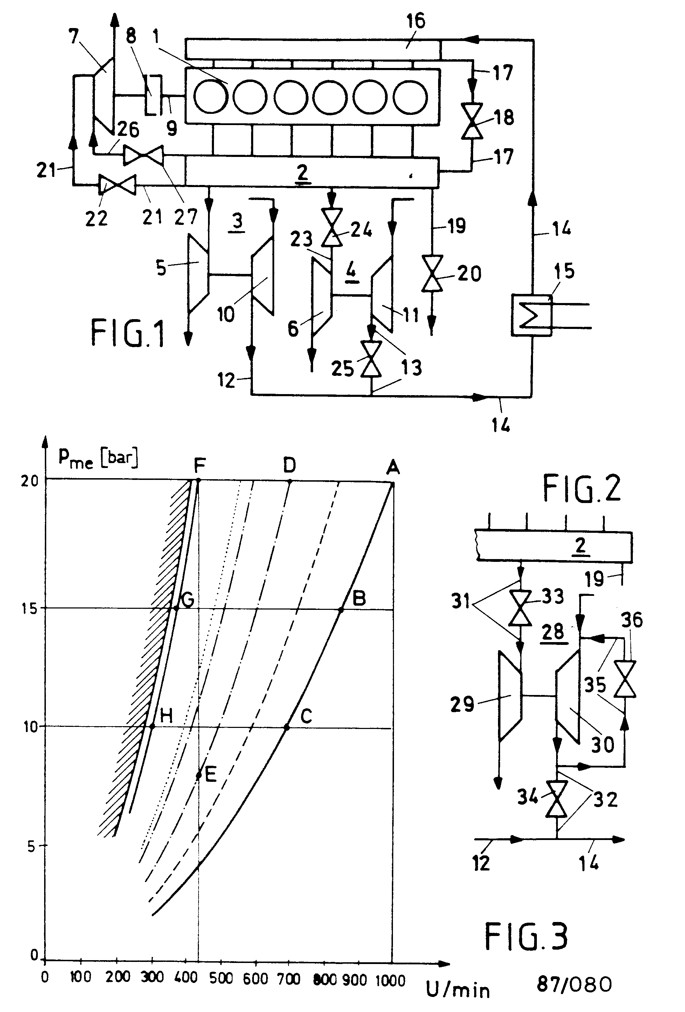

In Fig. 1 bezeichnet die Bezugszahl 1 einen Verbrennungsmotor mit sechs Zylindern. Deren Abgase werden in einem Abgasaufnehmer 2 gesammelt, von wo sie, je nach Betriebszustand des Motors, einer oder mehreren Laderturbinen 5 bzw. 6 zweier Abgasturbolader 3 und 4 und/oder einer Nutzturbine 7 zugeleitet werden. Diese kann über eine Schaltkupplung 8 mit der Abtriebswelle 9 gekuppelt oder von ihr getrennt werden. Bei dieser handelt es sich im vorliegenden Falle um die Kurbelwelle. Die Verdichter 10 und 11 der beiden Turbolader 3 bzw. 4 liefern über ihre Ladeluftstutzen 12 und 13 und eine gemeinsame Ladeluftsammelleitung 14 die Ladeluft über einen Ladeluftkühler 15 in einen Ladeluftaufnehmer 16 auf der Ansaugseite des Motors.

Ein Ueberströmkanal 17 mit einer Ueberströmklappe 18 verbindet den Ladeluftaufnehmer 16 mit dem Abgasaufnehmer 2. Von diesem zweigt ein Abblasekanal 19 mit einer Abblaseklappe 20 ins Freie ab. In einer ersten Nutzturbinenabgasleitung 21 zwischen dem Abgasaufnehmer 2 und der Nutzturbine 7 ist eine Absperrklappe 22 angeordnet, zwei weitere Absperrklappen 24 und 25 befinden sich in der Laderturbinenabgasleitung 23 bzw. zwischen dem Ladeluftstutzen 13 des Verdichters 11 des Laders 4 und der Ladeluftsammelleitung 14.

Eine weitere, zweite Nutzturbinenabgasleitung 26 mit einer Absperrklappe 27 zwischen dem Abgasaufnehmer 2 und der Einlassseite der Nutzturbine 7 deutet an, dass diese sektorweise, vorliegend über zwei Sektoren, beaufschlagt wird. Die Einlassseite kann auch drei oder mehr Sektoren, vorzugsweise durch Absperrklappen stillzusetzende, aufweisen, was eine feinere Abstufung der Abgaszufuhr zur Nutzturbine ermöglicht. Statt zweier einstufiger Abgasturbolader 3 und 4 kann einer oder können beide auch zweistufige oder mehrstufige Turboladergruppen seien, was in Verbindung mit entsprechend angeordneten Klappen ebenfalls eine feinere Anpassung der Ladeluftsteuerung an den jeweiligen Lastzustand ermöglicht. Dasselbe gilt auch für Turbolader mit variabler Turbinengeometrie bekannter Bauarten, z.B. für solche mit in der Einlaufspirale verschiebbarem platten- oder kolbenförmigem Wandelement, das bei verringertem Abgasstrom diesen einschnürt und daher beschleunigt, oder bei solchen mit mehreren ab- bzw. zuschaltbaren Gaskanälen, durch die ein schwächerer Abgastrom ebenfalls zu einem antriebswirksamen, konzentrischen Strahl geformt wird.

Durch verschiedene Schaltungen der beschriebenen Klappen und, sofern vorhanden, der Elemente zur Aenderung des Schluckvermögens der Laderturbine, lässt sich der Ladedruck in einem weiten Bereich dem jeweiligen Bedarf des Motors anpassen. Laderturbinen mit nicht verstellbarem Eintrittsquerschnitt für das Abgas sind für einen Teillastbereich ausgelegt, bei dem der Abgasstrom einen zur Lieferung der benötigen Ladeluft genügend starken Antriebsimpuls für die Laderturbine erzeugt. Falls der Abgasstrom nicht für die beiden Turbinen 5 und 6 ausreicht, kann die eine, nämlich 6, durch Schliessen der Klappen 24 und 25 abgestellt werden, wobei die letztgenannte verhindert, dass die vom Verdichter 10 gelieferte Ladeluft in den Verdichter 11 gelangt. Bei Verwendung zweistufiger Turboladergruppen besteht die gleiche Möglichkeit, den jeweils verfügbaren Abgasstrom jener Turbinengruppe zuzuteilen, deren Schluckfähigkeit die beste Ausbeute an Ladeluft ergibt.

Eine weitere Möglichkeit, den für einen bestimmen Teillastbereich erforderlichen Ladeluftstrom zu erzeugen, ist die vollständige oder teilweise Absperrung des Abgasstromes zur Nutzturbine durch Absperrklappen 22 und 27. Sie wird dann vom Motor 1 abgekuppelt. Weitere Möglichkeiten zur Anpassung der Ströme und Drücke von Abgas und Ladeluft an das gemeinsame Teillastverhalten bieten die Abblase- bzw. die Ueberströmeinrichtung.

Bei Ueberschreiten des maximal zulässigen Zylinderdrucks wird über den Abblasekanal 19, von einem nicht dargestellten Servogerät gesteuert, aus dem Abgasaufnehmer 2 überschüssiges Abgas durch Oeffnen der Abblaseklappe 20 abgelassen. Ebenso könnte aus dem Ladeluftaufnehmer abgeblasen werden. Der Ueberströmkanal 17 mit der Ueberströmklappe 18 dient dazu, das Pumpen der Verdichter 10 und 11 zu verhindern. Falls solches auftritt, wird die Klappe 18 geöffnet und das Schluckvermögen der Aufladeeinrichtung erhöht.

Eine Variante zu der am Turbolader 4 gezeigten Schaltung für die Steuerung des Abgas- und des Ladeluftstromes zeigt die Fig. 2. Dieser Abgaturbolader 28 weist in seiner Laderturbinenabgasleitung 31 zur Laderturbine 29 und im Ladeluftstutzen 32 seines Verdichters 30 je eine Absperrklappe 33 bzw. 34 auf, durch welche die Turbine 29 gedrosselt oder stillgesetzt und der Verdichter 30 ausser Betrieb gesetzt werden kann. Werden Turbine und Verdichter stillgesetzt, so entspricht dies der Schaltung des Turboladers 4 nach Fig. 1. Bei einer Drosselung der Turbine 29 durch teilweises Schliessen der ihr vorgeschalteten Absperrklappe 33 verarbeitet sie einen Teil des Abgasstromes, wobei aber der Verdichter 30, ohne in die Ladeluftsammelleitung 14 zu fördern, in sich kurzgeschlossen leer mitläuft. Er wälzt dann die Luft bei geschlossener Absperrklappe 34 und geöffneter Ueberströmklappe 35, welche seine Druckseite mit seinen Ansaugseite verbindet, leer um. Bei normalem Laderbetrieb sind die Klappen 33 und 34 vor der Turbine bzw. nach dem Verdichter geöffnet und die Ueberströmklappe 36 ist geschlossen.

Diese Schaltung kann als Ersatz für die Abblaseeinrichtung 19 und 20 dienen oder neben derselben zusätzlich zu einer Druckentlastung beitragen.

Je nach dem Verwendungszweck eines Motors wird man die beschriebenen Abschalt- bzw. Zuschaltmöglichkeiten der Anlage für den einen oder anderen Bereich der geforderten Teillastcharakteristik benutzen. Das in Fig. 3 gezeigte Diagramm stellt beispielsweise für einige Teillastzustände eines Schiffsdieselmotors die Abhängigkeit des mittleren effectiven Druckes $p_{me}$ in den Zylindern von der Drehzahl dar. Die Kurven stellen die Verläufe der erforderlichen Motorleistung beim Betrieb auf verschiedenen Propellerkurven dar. Ausgehend vom Maximalleistungspunkt A wird man bis zum Punkt B beide Turbolader und die Nutzturbine betreiben, sodann im Bereich B bis C die Nutzturbine ganz oder partiell abschalten, so dass spätestens bei C die zwei Turbolader allein arbeiten. Entlang der strichpunktierten Kurve mit niedrigerer Kraftstoffzufuhr wird man von D bis E weiter mit zwei Turboladern fahren, bei Turbinen mit variabler Schluckfähigkeit im unteren Bereich eventuell mit eingeschnürtem Turbineneinlass, und entlang der linken, voll ausgezogen, im gegenständlichen Falle noch praktisch brauchbaren Kurve von F bis G und H mit nur noch einem Turbolader, gegebenenfalls im letzten Abschnitt mit reduziertem Turbineneinlassquerschnitt. Im Bereich von F bis G kann zur Reduktion des maximalen Zylinderdrucks über den Abblasekanal 19 und die geöffneten Abblaseklappen 20 der Druck im Abgasaufnehmer 2 vermindert oder es kann zum selben Zweck der Verdichter 30 des zweiten Turboladers 28 bei gedrosselter Turbine 29 umblasen werden.

Die Aenderungen der zu regelnden Grössen Abgas- und Ladedruck, Drehzahl und Kraftstoffzufuhr werden von Signalgebern bekannter Bauart erfasst, welche die Regeleingriffe der Stellglieder für das Ab-, Um- und Zuschalten der Turbinen, Verdichter, Abblase- und Ueberströmeinrichtungen und Verstellen der Kraftstoffzufuhr auslösen. Als Stellglieder kommen in bekannter Weise hydraulische, pneumatische, elektrische und elektrohydraulische, elektro-pneumatische und elektro-mechanische Geräte in Betracht, wie Membrandosen, Magnetventile, Hydraulikzylinder und dgl..

**Patentansprüche**

1.　Verbrennungsmotor mir Registeraufladung, mit einem ersten Abgasturbolader (3) und einem zweiten Abgasturbolader (4;28), deren Laderturbinen (5;6;29) parallel an einen Abgasaufnehmer (2) des Verbrennungsmotors (1) angeschlossen sind und deren Verdichter (10;11;30) mit ihren Ladeluftstutzen (12;13;32) parallel in eine Ladeluftsammelleitung (14) einmünden, welche diese Ladeluftstutzen (12;13;32) mit dem Ladeluftaufnehmer (16) des Motors (1) verbindet, dadurch gekennzeichnet, dass an der Abtriebswelle (9) des Motors (1) eine mit dieser Abtriebswelle (9) kuppelbare Nutzturbine (7) vorhanden ist, die parallel zu den genannten Laderturbinen (5;6;29) über eine absperrbare, leitende Verbindung (21 + 22;26 + 27) an den Abgasaufnehmer (2) angeschlossen ist, dass in der Laderturbinenabgasleitung (23;31) zwischen dem Abgasaufnehmer (2) und der Laderturbine (6;29) des zweiten Abgasturboladers (4;28) sowie im Ladeluftstutzen (13;32) zwischen dem Verdichter (11;30) des zweiten Abgasturboladers (4;28) und der Ladeluftsammelleitung (14) je eine Absperrklappe (24;33 bzw. 25;34) vorhanden ist, und dass das Eintrittsgehäuse der Nutzturbine (7) in zwei Sektionen unterteilt ist, die unabhängig voneinander über je eine Nutzturbinenabgasleitung (21;26) mit dem Abgasaufnehmer (2) verbunden sind und je eine Absperrklappe (22;27) aufweisen.

2. Verbrennungsmotor nach Anspruch 1 dadurch gekennzeichnet, dass beim zweiten Abgasturbolader (28) die Druckseite des Verdichters (30) mit seiner Saugseite durch eine Ueberströmleitung (35), in der eine Ueberströmklappe (36) vorgesehen ist, in Verbindung steht.

3. Verbrennungsmotor nach Anspruch 1, dadurch gekennzeichnet, dass der Abgasaufnehmer (2) einen Abblasekanal (19) mit einer Abblaseklappe (20) aufweist und dass der Ladeluftaufnehmer (16) mit dem Abgasaufnehmer (20) durch einen Ueberströmkanal (17) mit einer Ueberströmklappe (18) in Verbindung steht.

## Claims

1. Internal combustion engine with sequential supercharging, having a first exhaust gas turbocharger (3) and a second exhaust gas turbocharger (4; 28) whose supercharger turbines (5; 6; 29) are connected in parallel to an exhaust gas receiver (2) of the internal combustion engine (1) and the boost air outlet pipes (12; 13; 32) of whose compressors (10; 11; 30) open, in parallel, into a boost air collecting pipe (14) which connects these boost air outlet pipes (12; 13; 32) to the boost air receiver (16) of the engine (1), characterised in that a power turbine (7) is present on the driven shaft (9) of the engine (1) and can be connected to this driven shaft (9), which power turbine (7) is connected in parallel with the supercharger turbines (5; 6; 29) mentioned via a connection (21 + 22; 26 + 27), which can be shut off, leading to the exhaust gas receiver (2), in that in each case one shut-off butterfly (24; 33 and 25; 34) is present in the supercharger turbine exhaust gas pipe (23; 31) between the exhaust gas receiver (2) and the supercharger turbine (6; 29) of the second exhaust gas turbocharger (4; 28) and another is present in the boost air outlet pipe (13; 32) between the compressor (11; 30) of the second exhaust gas turbocharger (4; 28) and in the boost air collecting pipe (14) and in that the inlet casing of the power turbine (7) is subdivided into two sections which are connected independently of one another to the exhaust gas receiver (2) by one power turbine exhaust gas pipe each (21; 26) and one shut-off butterfly each (22; 27).

2. Internal combustion engine according to Claim 1, characterised in that in the case of the second exhaust gas turbocharger (28), the pressure side of the compressor (30) is connected to its suction side by a relief pipe (35) in which is provided a relief butterfly (36).

3. Internal combustion engine according to Claim 1, characterised in that the exhaust gas receiver (2) has a blow-down duct (19) with a blow-down butterfly (20) and in that the boost air receiver (16) is connected to the exhaust gas receiver (20) (sic) by a relief duct (17) with a relief butterfly (18).

## Revendications

1. Moteur à combustion interne avec une suralimentation à étages, avec un premier turbocompresseur à gaz d'échappement (3) et un second turbocompresseur à gaz d'échappement (4; 28), dont les turbines de turbocompresseur (5; 6; 29) sont raccordées en parallèle à un collecteur (2) des gaz d'échappement du moteur à combustion interne (1) et dont les compresseurs (10; 11; 29) débouchent en parallèle par leurs tubulures d'air de suralimentation (12; 13; 32) dans une conduite de collecte d'air de suralimentation (14), qui relie ces tubulures d'air de suralimentation (12; 13; 32) au collecteur d'air de suralimentation (16) du moteur (1), caractérisé en ce qu'à l'arbre moteur (9) du moteur se trouve une turbine de récupération (7) couplable à cet arbre moteur (9), qui est raccordée au collecteur des gaz d'échappement (2) en parallèle avec lesdites turbines de turbocompresseur (5; 6; 29) par un raccordement (21 + 22; 26 + 27) conducteur obturable, en ce que dans la conduite des gaz d'échappement vers la turbine de turbocompresseur (23; 31) entre le collecteur des gaz d'échappement (2) et la turbine de turbocompresseur (6; 29) du second turbocompresseur à gaz d'échappement (4; 28) comme dans la tubulure d'air de suralimentation (13; 32) entre le compresseur (11; 30) du second turbocompresseur à gaz d'échappement (4; 28) et la conduite de collecte de l'air de suralimentation (14) est disposé un clapet d'arrêt (24; 33 respectivement 25; 34), et en ce que le corps d'entrée de la turbine de récupération (7) est subdivisé en deux sections qui sont reliées indépendamment l'une de l'autre, chacune par une conduite (21; 26) des gaz d'échappement vers la turbine de récupération, au collecteur des gaz d'échappement (2) et qui présentent chacune un clapet d'arrêt (22; 27).

2. Moteur à combustion interne suivant la revendication 1, caractérisé en ce que dans le second turbocompresseur à gaz d'échappement (28), le côté de pression du compresseur (30) est en communication avec son côté d'aspiration par une conduite de trop-plein (35), dans laquelle il est prévu une soupape de trop-plein (36).

3. Moteur à combustion interne suivant la revendication 1, caractérisé en ce que le collecteur des gaz d'échappement (2) présente un canal d'évacuation (19) avec une soupape d'évacuation (20) et en ce que le collecteur d'air de suralimentation (16) est en communication avec le collecteur de gaz d'échappement (2) par un canal de tropplein (17) avec une soupape de trop-plein (18).

FIG.1

FIG.2

FIG.3

87/080